# EUROPEAN PATENT APPLICATION

(11) **EP 4 438 293 A1**
(43) Date of publication of application: **02.10.2024**
(21) Application number: 22898185.8
(22) Date of filing: 23.08.2022
(51) Int. Cl.: B32B 15/08, B32B 15/088

(54) **MULTI-LAYERED BODY, AND METHOD FOR PRODUCING MULTI-LAYERED BODY**

(30) Priority: 25.11.2021 JP 2021191023; 25.11.2021 JP 2021191024
(71) Applicant: GLOBAL POLYACETAL CO., LTD., Tokyo 105-0021 (JP)
(72) Inventor: KATO Tomonori, Hiratsuka-shi, Kanagawa 254-0016 (JP); AYUBA Shinichi, Hiratsuka-shi, Kanagawa 254-0016 (JP)
(74) Representative: Zimmermann & Partner Patentanwälte mbB
(86) International application number: PCT/JP2022/031709
(87) International publication number: WO 2023/095400

(57) **Abstract**

To provide a multilayer body, cotaining a metal plate; and a prepreg adhered directly or indirectly to the metal plate in the plane direction, wherein the prepreg has continuous reinforcing fibers arranged parallelly in one direction impregnated with a polyamide resin, and contains 5 to 300 parts by mass of the continuous reinforcing fibers with respect to 100 parts by mass of the polyamide resin; and the metal plate has a tensile strength as measured according to JIS Z2241 of 300 MPa or higher and 1,400 MPa or lower.

## Description

### [Technical Field]

The present invention relates to a multilayer body and a method for producing a multilayer body.

### [Background Art]

Multilayer bodies of a metal plate (metal layer) and a prepreg are conventionally studied. Such multilayer bodies are beneficial in the case of being intended to maintain the high strength and simultaneously reduce the mass.

As one example of such multilayer bodies, Patent Literature 1 discloses a laminate which has a metal layer and a carbon fiber-reinforced polyamide resin layer on the surface of the metal layer, wherein the carbon fiber-reinforced polyamide resin layer contains, with respect to 100 parts by mass of a polyamide resin (A) composed of a diamine unit and a dicarboxylic acid unit, 5 to 300 parts by mass of carbon fibers (B), and 70% by mol or more of the diamine unit is originated from xylylenediamine and 70% by mol or more of the dicarboxylic acid unit is originated from sebacic acid.

### [Citation List]

### [Patent Literature]

[Patent Literature 1] Japanese Patent Laid-Open No. 2016-043526

### [Summary of Invention]

### [Technical Problem]

Although it is desirable that multilayer bodies having a metal plate and a prepreg are higher in the bending strength, because the multilayer bodies give molded articles having a higher strength, when the bending load is high, the workability thereof becomes difficult.

The present invention aims at solving such a problem, and has an object to provide a multilayer body high in the bending strength and excellent in the workability, and a method for producing the multilayer body.

### [Solution to Problem]

The present inventors conducted research to address the above -mentioned problems, and as a result, discovered that the above problems could be solved by making a multilayer body of a metal plate having a predetermined tensile strength and a prepreg in which continuous reinforcing fibers arranged parallelly in one direction are impregnated with a polyamide resin.

Specifically, the problems described above are solved by the following means.
<1> A multilayer body, comprising: a metal plate; and a prepreg adhered directly or indirectly to the metal plate in the plane direction,
   wherein the prepreg has continuous reinforcing fibers arranged parallelly in one direction impregnated with a polyamide resin, and contains 5 to 300 parts by mass of the continuous reinforcing fibers with respect to 100 parts by mass of the polyamide resin; and the metal plate has a tensile strength as measured according to JIS Z2241 of 300 MPa or higher and 1,400 MPa or lower.
<2> The multilayer body according to <1>, wherein the metal plate has the tensile strength as measured according to JIS Z2241 of 1,200 MPa or lower.
<3> The multilayer body according to <1> or <2>, wherein the continuous reinforcing fibers comprise at least one selected from the group consisting of carbon fibers and glass fibers.
<4> The multilayer body according to any one of <1> to <3>, wherein the metal plate has a thickness of 2.0 mm or smaller.
<5> The multilayer body according to any one of <1> to <4>, wherein the prepreg has a content of the continuous reinforcing fibers of 30 to 70% by volume.
<6> The multilayer body according to any one of <1> to <5>, wherein the polyamide resin comprises a polyamide resin containing a constitutional unit originated from diamines and a constitutional unit originated from dicarboxylic acids, wherein 70% by mol or more of the constitutional unit originated from diamines is originated from xylylenediamines, and 70% by mol or more of the constitutional unit originated from dicarboxylic acids is originated from α,ω-straight-chain aliphatic dicarboxylic acids having 4 to 20 carbon atoms.
<7> The multilayer body according to <1>,
   wherein the continuous reinforcing fibers comprise at least one selected from the group consisting of carbon fibers and glass fibers;
   the metal plate has a thickness of 2.0 mm or smaller;
   the prepreg has a content of the continuous reinforcing fibers of 30 to 70% by volume; and
   the polyamide resin comprises a polyamide resin containing a constitutional unit originated from diamines and a constitutional unit originated from dicarboxylic acids, wherein 70% by mol or more of the constitutional unit originated from diamines is originated from xylylenediamines, and 70% by mol or more of the constitutional unit originated from dicarboxylic acids is originated from α,ω-straight-chain aliphatic dicarboxylic acids having 4 to 20 carbon atoms.
<8> A method for producing a multilayer body according to any one of <1> to <7>, the method comprising heat welding the metal plate and the prepreg having continuous reinforcing fibers arranged parallelly in one direction impregnated with a polyamide resin.
<9> A method for producing a multilayer body according to any one of <1> to <7>, the method comprising vibration welding, ultrasonic welding or laser welding the metal plate and the prepreg having continuous reinforcing fibers arranged parallelly in one direction impregnated with a polyamide resin.
<10> A method for producing a multilayer body,
   comprising a metal plate and a prepreg welded to the metal plate in the plane direction,
   wherein the prepreg has continuous reinforcing fibers arranged parallelly in one direction impregnated with a polyamide resin;
   the prepreg contains 5 to 300 parts by mass of the continuous reinforcing fibers with respect to 100 parts by mass of the polyamide resin; and
   the metal plate has a tensile strength as measured according to JIS Z2241 of 300 MPa or higher and 1,400 MPa or lower,
<11> The method for producing a multilayer body according to <10>, wherein the xylylenediamine-based polyamide resin film has a thickness of 15 to 50 µm.
<12> The method for producing a multilayer body according to <10> or <11>, wherein the prepreg comprises a polyamide resin containing a constitutional unit originated from diamines and a constitutional unit originated from dicarboxylic acids, wherein 70% by mol or more of the constitutional unit originated from diamines is originated from xylylenediamines, and 70% by mol or more of the constitutional unit originated from dicarboxylic acids is originated from α,ω-straight-chain aliphatic dicarboxylic acids having 4 to 20 carbon atoms.
<13> The method for producing a multilayer body according to any one of <10> to <12>, wherein the welding is carried out by laser welding wherein laser irradiation is carried out from the prepreg side.
<14> The method for producing a multilayer body according to any one of <10> to <13>, wherein the continuous reinforcing fibers comprise at least one selected from the group consisting of carbon fibers and glass fibers.
<15> The method for producing a multilayer body according to any one of <10> to <14>, wherein the metal plate has a thickness of 2.0 mm or smaller.
<16> The method for producing a multilayer body according to any one of <10> to <15>, wherein the prepreg has a content of the continuous reinforcing fibers of 30 to 70% by volume.
<17> The method for producing a multilayer body according to any one of <10> to <16>, wherein the multilayer body is a vehicular pillar or a constituent part thereof.
<18> The method for producing a multilayer body according to <10>,
   wherein the xylylenediamine-based polyamide resin film has a thickness of 15 to 50 µm;
   the prepreg comprises a polyamide resin containing a constitutional unit originated from diamines and a constitutional unit originated from dicarboxylic acids, wherein 70% by mol or more of the constitutional unit originated from diamines is originated from xylylenediamines, and 70% by mol or more of the constitutional unit originated from dicarboxylic acids is originated from α,ω-straight-chain aliphatic dicarboxylic acids having 4 to 20 carbon atoms;
   the welding is carried out by laser welding wherein laser irradiation is carried out from the prepreg side;
   the continuous reinforcing fibers comprise at least one selected from the group consisting of carbon fibers and glass fibers;
   the metal plate has a thickness of 2.0 mm or smaller;
   the prepreg has a content of the continuous reinforcing fibers of 30 to 70% by volume; and
   the multilayer body is a vehicular pillar or a constituent part thereof.
<19> The method for producing a multilayer body according to any one of <10> to <18>, wherein the metal plate has a tensile strength as measured according to JIS Z2241 of 300 MPa or higher and 1,200 MPa or lower.
<20> A multilayer body,
   wherein a metal plate, a xylylenediamine-based polyamide resin film and a prepreg having continuous reinforcing fibers arranged parallelly in one direction impregnated with a polyamide resin are laminated so as to be contacted in this order;
   the metal plate has a tensile strength as measured according to JIS Z2241 of 300 MPa or higher and 1,400 MPa or lower; and
   the xylylenediamine-based polyamide resin film comprises a polyamide resin containing a constitutional unit originated from diamines and a constitutional unit originated from dicarboxylic acids, wherein 70% by mol or more of the constitutional unit originated from diamines is originated from xylylenediamines, and 70% by mol or more of the constitutional unit originated from dicarboxylic acids is originated from α,ω-straight-chain aliphatic dicarboxylic acids having 4 to 20 carbon atoms.

### [Advantageous Effects of Invention]

According to the present invention, a multilayer body high in the bending strength and excellent in the workability, and a method for producing the multilayer body has become possible to be provided.

### [Brief Description of Drawings]

[Figure 1] Figure 1 is a cross-sectional schematic view showing a layer structure of a multilayer body in a first embodiment.
[Figure 2] Figure 2 is a cross-sectional schematic view showing a layer structure of a multilayer body in a second embodiment.

### [Description of Embodiments]

Hereinafter, embodiments to carry out the present invention (hereinafter, referred to simply as "the present embodiments") will be described in detail. Then, the following present embodiments are exemplifications to interpret the present invention, and the present invention is not limited only to the present embodiments.

Here, in the present description, "to" is used in the meaning that the numerical values before and after the "to" are included as the lower limit value and the upper limit value.

In the present description, various physical property values and characteristic values are, unless otherwise specified, those at 23°C.

In the present description, the number-average molecular weight is a value in terms of polystyrene measured by a GPC (gel permeation chromatography) method.

In the case where Standards indicated in the present description for measurement methods and the like vary depending on years, unless otherwise specified, the Standards are based on Standards as of January 1, 2021.

A multilayer body of a first embodiment has a metal plate, and a prepreg adhered directly or indirectly to the metal plate in the plane direction, wherein the prepreg has continuous reinforcing fibers arranged parallelly in one direction impregnated with a polyamide resin; the prepreg contains 5 to 300 parts by mass of the continuous reinforcing fibers with respect to 100 parts by mass of the polyamide resin; and the tensile strength of the metal plate as measured according to JIS Z2241 is 300 MPa or higher and 1,400 MPa or lower.

The metal plate is high in the tensile strength and excellent in the strength, but is likely to be lower in the ductility, the higher the tensile strength. When the metal plate is press worked, it becomes easier for defective formation such as "cracks" to be generated.

In the first embodiment, it is presumed that by making a multilayer body of a metal plate and a prepreg in which continuous reinforcing fibers arranged parallelly in one direction are impregnated with a polyamide resin, when the portion of the prepreg is heated, the strength of the multilayer body is decreased and the workability can be improved. On the other hand, in the first embodiment, by laminating the metal plate having a tensile strength as measured according to JIS Z224 of 300 MPa or higher and 1,400 MPa or lower and the prepreg containing continuous reinforcing fibers arranged parallelly in one direction, the bending strength at ordinary temperature can be raised.

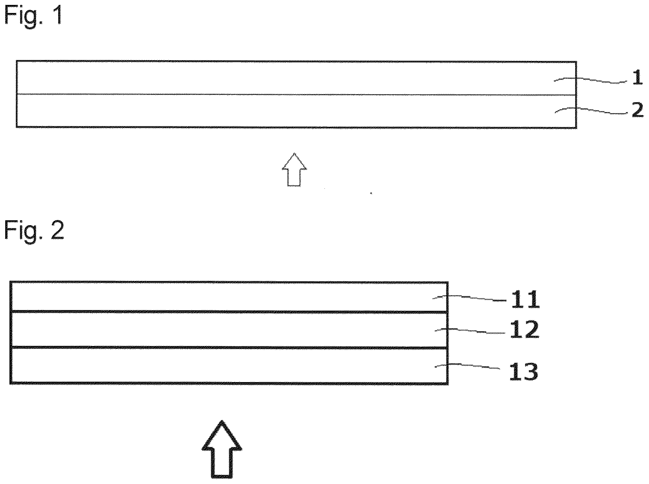

The multilayer body of the first embodiment has, for example, as shown in Figure 1, a metal plate 1, and a prepreg 2 adhered directly or indirectly to the metal plate 1 in the plane direction. The metal plate 1 and the prepreg 2 may be adhered directly or may be adhered indirectly. A preferable form is direct adhesion. Then, the case of indirect adhesion is a case where the multilayer body has an adhesive layer or a resin layer (preferably a polyamide resin layer, more preferably a xylylenediamine-based polyamide resin layer) between the metal plate 1 and the prepreg 2.

Then, in Figure 1, the ratios of thicknesses of each layer are not always reproduced.

In Figure 1, the prepreg 2 is of only one layer (one ply), but may be of two or more layers (two or more plies). In the case of having two or more layers, the lamination may be made so that continuous reinforcing fibers are in different directions. For example, the lamination may be carried out so as to form an angle made by the direction of the continuous reinforcing fibers of a first layer against the direction of the continuous reinforcing fibers of a second layer of 90°.

The metal plate to be used in the first embodiment has a tensile strength as measured according to JIS Z2241 of 300 MPa or higher and 1,400 MPa or lower. By using such a metal plate, the multilayer body excellent in strength can be obtained. The tensile strength of the metal plate is preferably 400 MPa or higher, more preferably 550 MPa or higher, still more preferably 590 MPa, further still more preferably 600 MPa, further still more preferably 800 MPa, further still more preferably 900 MPa or higher and especially preferably 1,000 MPa or higher. The upper limit value may be, for example, 1,200 MPa or lower.

The thickness of the metal plate in the first embodiment is preferably 2.0 mm or smaller, more preferably 1.8 mm or smaller, still more preferably 1.6 mm or smaller, further still more preferably 1.3 mm or smaller and further still more preferably 1.1 mm or smaller. By making the thickness not larger than the above upper limit value, the working characteristic such as bending work is likely to be improved. Further, the thickness of the metal plate in the first embodiment is preferably 0.1 mm or larger, more preferably 0.3 mm or larger, still more preferably 0.6 mm or larger and further still more preferably 0.8 mm or larger. By making the thickness not smaller than the above lower limit value, the strength of the multilayer body is likely to be improved more.

The metal plate is a plate containing a metal as a major component. Here, the "plate containing a metal as a major component" means that 70% by mass or more of the metal plate is the metal, and usually, 90% by mass or more of the metal plate is the metal, and it is preferable that 98% by mass or more thereof is the metal. The metal contained in the metal plate may be of one kind, or may be of two or more kinds. In the case of containing two or more kinds, the total amount thereof is the amount of the metal contained in the metal plate.

The metal contained in the metal plate in the first embodiment is a low-carbon steel containing silicon and manganese as major components and as required, copper, chromium, nickel, molybdenum and the like.

The metal plate to be used in the first embodiment is preferably a so-called high tensile strength steel.

It is preferable that the metal plate of the first embodiment has irregularities on the surface. Due to having irregularities, in the multilayer body to be obtained, the welding strength with the prepreg can be enhanced more.

The irregularities can be formed by carrying out a surface-roughening treatment on the surface of the metal plate. The surface-roughening treatment is not especially determined, but examples thereof include machining and/or grinding. The machining and/or grinding is not especially limited as long as being work of shaving off part of the surface of the metal. Examples of the machining and/or grinding include filing using sandpaper or the like, sandblasting using abrasives, and surface treatments to form nano-level dimples on the metal plate surface. For details thereof, the description in paragraphs 0018 to 0021 of Japanese Patent Laid-Open No. 2003-103563 can be referred to, and the contents of which are hereby incorporated.

Although the surface-roughening treatment in the first embodiment means one using a so-called physical treatment, the surface of the metal plate may be treated, in addition to the surface-roughening treatment or in place of the surface-roughening treatment, by applying a compound to react with the metal to the surface of the metal. As a method of treating a metal plate by applying a compound to react with the metal to the surface of the metal, the description in paragraphs 0021 to 0026 of Japanese Patent Laid-Open No. 2003-103563 can be referred to, and the contents of which are hereby incorporated.

Then, the prepreg in the first embodiment will be described.

In the first embodiment, the prepreg is one which has continuous reinforcing fibers arranged parallelly in one direction impregnated with a polyamide resin, and contains 5 to 300 parts by mass of the continuous reinforcing fibers with respect to 100 parts by mass of the polyamide resin. By using the prepreg in which continuous reinforcing fibers arranged parallelly in one direction are present, the bending strength in the fiber longitudinal direction can be raised. Hence, the prepreg can be made into a material fully meeting bending work and the like. In particular, although in ultrahigh tensile strength steels, though being high in elastic modulus, when their thickness becomes large, a high stress becomes necessary for bending work and the workability remarkably decreases, the multilayer body of the first embodiment attains good bending workability and can simultaneously raise the strength.

The polyamide resin may be an aliphatic polyamide resin, may be a semi-aromatic polyamide resin or may be a mixture of the both. In the first embodiment, it is preferable that the polyamide resin contained in the prepreg contains at least a semi-aromatic polyamide resin.

Here, the semi-aromatic polyamide resin refers to one which is constituted of a constitutional unit originated from diamines and a constitutional unit originated from dicarboxylic acids wherein 20 to 80% by mol of the total of both the constitutional units is constitutional units containing aromatic rings. By using such a semi-aromatic polyamide resin, the mechanical strength of molded articles to be obtained can be raised. Examples of the semi-aromatic polyamide resin include polyamide 6T, polyamide 9T, polyamide 10T, polyamide 61, polyamide 9I, polyamide 6T/6I, polyamide 9T/9I and xylylenediamine-based polyamide resins described later, and the xylylenediamine-based polyamide resins are preferable.

Examples of the aliphatic polyamide resin include polyamide 6, polyamide 66, polyamide 666, polyamide 10, polyamide 610, polyamide 11 and polyamide 12; and polyamide 6, polyamide 66 and polyamide 666 are preferable, and polyamide 66 is more preferable.

In the first embodiment, it is preferable that the prepreg contains a xylylenediamine-based polyamide resin which contains a constitutional unit originated from diamines and a constitutional unit originated from dicarboxylic acids wherein 70% by mol or more of the constitutional unit originated from diamines is originated from xylylenediamines, and 70% by mol or more of the constitutional unit originated from dicarboxylic acids is originated from α,ω-straight-chain aliphatic dicarboxylic acids having 4 to 20 carbon atoms. By using the xylylenediamine-based polyamide resin, the adhesiveness with the metal plate can be improved more.

More preferably 75% by mol or more, still more preferably 80% by mol or more, further still more preferably 85% by mol or more, further still more preferably 90% by mol or more and further still more preferably 95% by mol or more of the constitutional unit originated from diamines of the xylylenediamine-based polyamide resin is originated from xylylenediamines. More preferably 75% by mol or more, still more preferably 80% by mol or more, further still more preferably 90% by mol or more and further still more preferably 95% by mol or more of the constitutional unit originated from dicarboxylic acids of the xylylenediamine-based polyamide resin is originated from α,ω-straight-chain aliphatic dicarboxylic acids having 4 to 20 carbon atoms.

Examples of diamines other than meta-xylylenediamine and para-xylylenediamine which can be used as raw material diamine components of the xylylenediamine-based polyamide resin include aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethylhexamethylenediamine and 2,4,4-trimethylhexamethylenediamine, alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin and bis(aminomethyl)tricyclodecane, and diamines having aromatic rings such as bis(4-aminophenyl) ether, para-phenylenediamine and bis(aminomethyl)naphthalene; and these can be used in one kind or as a mixture of two or more kinds.

Examples of preferable α,ω-straight-chain aliphatic dicarboxylic acids having 4 to 20 carbon atoms to be used as raw material dicarboxylic acid components of the xylylenediamine-based polyamide resin include aliphatic dicarboxylic acids such as succinic acid, glutaric acid, pimelic acid, suberic acid, azelaic acid, adipic acid, sebacic acid, undecanedioic acid and dodecanedioic acid; and these can be used in one kind or as a mixture of two or more kinds, but among these, adipic acid or sebacic acid is more preferable and adipic acid is more preferable because the melting point of the polyamide resin falls within a suitable range for molding. By using adipic acid, the welding strength with the metal plate can be raised.

Examples of dicarboxylic acid components other than the above α,ω-straight-chain aliphatic dicarboxylic acids having 4 to 20 carbon atoms include phthalic acid compounds such as isophthalic acid, terephthalic acid and ortho-phthalic acid, and isomers of naphthalenedicarboxylic acids, such as 1,2-naphthalenedicarboxylic acid, 1,3- naphthalenedicarboxylic acid, 1,4-naphthalenedicarboxylic acid, 1,5-naphthalenedicarboxylic acid, 1,6-naphthalenedicarboxylic acid, 1,7- naphthalenedicarboxylic acid, 1,8- naphthalenedicarboxylic acid, 2,3- naphthalenedicarboxylic acid, 2,6- naphthalenedicarboxylic acid and 2,7-naphthalenedicarboxylic acid; and these can be used in one kind or as a mixture of two or more.

In the xylylenediamine-based polyamide resin in the first embodiment, it is preferable that 0 to 100% by mol of the constitutional unit originated from diamines is originated from para-xylylenediamine; 100 to 0% by mol thereof is originated from meta-xylylenediamine; and 70% by mol or more (preferably 80% by mol or more, more preferably 90% by mol or more) of the constitutional unit originated from dicarboxylic acids is originated from sebacic acid and/or adipic acid.

In a more preferable embodiment of the xylylenediamine-based polyamide resin, an example of the xylylenediamine-based polyamide resin is one in which 70% by mol or more (preferably 80% by mol or more, more preferably 90% by mol or more, still more preferably 90% by mol or more) of the constitutional unit originated from diamines is originated from meta-xylylenediamine, and 70% by mol or more (preferably 80% by mol or more, more preferably 90% by mol or more, still more preferably 90% by mol or more, further still more preferably 99% by mol or more) of the constitutional unit originated from dicarboxylic acids is originated from adipic acid.

Although the xylylenediamine-based polyamide resin in the first embodiment is constituted of the constitutional unit originated from diamines and the constitutional unit originated from dicarboxylic acids as major components, the xylylenediamine-based polyamide resin does not completely exclude constitutional units other than these, and of course may contain constitutional units originated from lactams such as ε-caprolactam and laurolactam, and aliphatic aminocarboxylic acids such as aminocaproic acid and aminoundecanoic acid. Here, the "major components" refer to that the total number of the constitutional unit originated from diamines and the constitutional unit originated from dicarboxylic acids is largest in numbers of all constitutional units constituting the xylylenediamine-based polyamide resin. In the first embodiment, the total of the constitutional unit originated from diamines and the constitutional unit originated from dicarboxylic acids in the xylylenediamine-based polyamide resin accounts for preferably 90% by mass or more of all the constitutional units, more preferably 95% by mass or more thereof and still more preferably 98% by mass or more thereof.

In the first embodiment, it is preferable that the polyamide resin constituting the prepreg is composed of 90 to 100% by mass of the xylylenediamine-based polyamide resin, 10 to 0% by mass of a polyamide 66 and 3 to 0% by mass of other polyamide resins.

The melting point of the polyamide resin contained in the prepreg is preferably 150 to 350°C, more preferably 180 to 330°C and still more preferably 200 to 300°C.

The melting point can be measured according to JIS K7121 and K7122 using differential scanning calorimetry.

The lower limit of the number-average molecular weight (Mn) of the polyamide resin contained in the prepreg is preferably 6,000 or higher, more preferably 8,000 or higher and still more preferably 10,000 or higher. The upper limit of the Mn is preferably 25,000 or lower, more preferably 20,000 or lower and still more preferably 18,000 or lower. When the number-average molecular weight is in such a range, the heat resistance, the elastic modulus, the dimensional stability and the moldability become better.

The prepreg to be used in the first embodiment may contain various kinds of components in the range of not departing from the resin of the first embodiment. Specifically, additives and the like can be added such as elastomers, antioxidants, stabilizers such as thermal stabilizers, hydrolysis resistance improvers, weathering stabilizers, delustering agents, ultraviolet absorbents, nucleating agents, plasticizers, dispersants, flame retardants, antistatic agents, coloring preventives, antigelling agents, colorants, release agents and lubricants. For details thereof, the description in paragraphs 0130 to 0155 in Japanese Patent No. 4894982 can be referred to, and the contents of which are hereby incorporated. The total amount of these components is, with respect to the polyamide resin contained in the prepreg, preferably 10% by mass or lower, more preferably 5% by mass or lower and still more preferably 3% by mass or lower, and may be 1% by mass or lower.

It is usually preferable that these components are impregnated, in the state of being blended in the polyamide resin, in the continuous reinforcing fibers.

The prepreg in the first embodiment contains the continuous reinforcing fibers.

The "continuous fiber" refers to a fiber of longer than 50 mm, and is practically a fiber of longer than 50 cm. The cross-section of the reinforcing fiber in the present invention may be of a circular shape or may be of a flat shape. The continuous reinforcing fibers may be used in one kind, or may be used in two or more kinds. The average fiber length of the continuous reinforcing fibers to be used in the first embodiment is not especially limited, but is, for example, preferably in the range of 10 cm to 1,000 m, more preferably 50 cm to 700 m and still more preferably 1 to 500 m.

The continuous reinforcing fibers to be used in the first embodiment include inorganic fibers such as glass fibers, carbon fibers, alumina fibers, boron fibers, ceramic fibers and metal fibers (steel fibers), and organic fibers such as plant fibers (including Kenaf fibers and bamboo fibers), aramid fibers, polyoxymethylene fibers, aromatic polyamide fibers, polyparaphenylene benzobisoxazole fibers and ultrahigh molecular weight polyethylene fibers. Among these, the continuous reinforcing fibers contain preferably at least one kind of carbon fibers, aramid fibers and glass fibers, more preferably at least one kind of carbon fibers and glass fibers, and still more preferably at least one kind of carbon fibers.

It is preferable that the continuous reinforcing fibers to be used in the first embodiment is those treated with a treating agent. Examples of such a treating agent include sizing agents and surface treating agents; and treating agents described in paragraphs 0093 and 0094 in Japanese Patent No. 4894982 are preferably adopted, the contents of which are hereby incorporated.

Examples of the surface treating agents include those composed of functional compounds such as epoxy-based compounds, acrylic compounds, isocyanate-based compounds, silane-based compounds and titanate-based compounds; and examples thereof are silane-based coupling agents and titanate-based coupling agents, and silane-based coupling agents are preferable.

Then, the sizing agent is preferably at least one of epoxy resins, urethane resins, silane-based compounds, isocyanate-based compounds, titanate-based compounds and polyamide resins, more preferably at least one of epoxy resins, urethane resins, silane coupling agents, water-insoluble polyamide resins and water-soluble polyamide resins, still more preferably at least one of epoxy resins, urethane resins, water-insoluble polyamide resins and water-soluble polyamide resins, and further still more preferably a water-soluble polyamide resin.

The amount of the treatment agent is preferably 0.001 to 1.5% by mass of the continuous reinforcing fibers, more preferably 0.1 to 1.2% by mass thereof and still more preferably 0.3 to 1.1% by mass thereof.

As a method of treating the continuous reinforcing fibers with a treating agent, a well-known method can be adopted. Examples thereof include a method of dipping the continuous reinforcing fibers in a solution containing a treating agent dissolved therein to cause the treating agent to be adhered on the surface of the continuous reinforcing fibers. Further, a treating agent can also be applied by air blow on the surface of the continuous reinforcing fibers. Further, the continuous reinforcing fibers having already been treated with a surface treating agent or a treating agent may be used, or the continuous reinforcing fibers may be those obtained by washing out a surface treating agent or a treating agent on commercially available products, and then afresh carrying out a surface treatment so as to apply a desired amount of a treating agent.

In the first embodiment, the content of the continuous reinforcing fibers in the prepreg is preferably 30% by volume or higher and more preferably 35% by volume or higher, and preferably 70% by volume or lower, more preferably 65% by volume or lower, still more preferably 60% by volume or lower and further still more preferably 55% by volume or lower, and further may be 50% by volume or lower and further 45% by volume or lower.

In the first embodiment, the content of the continuous reinforcing fibers in the prepreg is, with respect to 100 parts by mass of the polyamide resin, 5 parts by mass or higher, preferably 10 parts by mass or higher, more preferably 20 parts by mass or higher, still more preferably 30 parts by mass or higher, further still more preferably 35 parts by mass or higher and further still more preferably 40 parts by mass or higher, and 300 parts by mass or lower, preferably 250 parts by mass or lower, more preferably 200 parts by mass or lower, still more preferably 160 parts by mass or lower and further still more preferably 140 parts by mass or lower.

The prepreg may contain only one kind of the continuous reinforcing fibers, or may contain two or more kinds thereof. In the case of containing two or more kinds thereof, it is preferable that the total volume or the total mass falls within the above range.

In the prepreg, the continuous reinforcing fibers and the polyamide resin account for preferably 90% by mass or higher of the entire, more preferably 95% by mass or higher thereof and still more preferably 97% by mass or higher thereof. The upper limit corresponds to that the total of the continuous reinforcing fibers and the polyamide resin becomes 100% by mass.

The thickness of the prepreg is, per ply, preferably 15 µm or larger, more preferably 20 µm or larger, still more preferably 25 µm or larger and further still more preferably 30 µm or larger, and preferably 300 µm or smaller, more preferably 250 µm or smaller and still more preferably 200 µm or smaller.

In the first embodiment, it is preferable that the prepregs are laminated in 1 to 5 plies.

In the multilayer body of the first embodiment, the maximum bending load is preferably 800 N or higher, preferably 900 N or higher and more preferably 1,000 N or higher. The upper limit of the maximum bending load is preferably 2,500 N or lower. The maximum bending load is measured according to the description in Examples described later.

Such a maximum bending load can be attained by using the metal plate and the continuous reinforcing fibers in the prepreg being arranged parallelly in one direction.

The multilayer body of the first embodiment can be produced by a well-known method.

It is preferable that the method for producing the multilayer body of the first embodiment involves heat welding the metal plate and the prepreg having the continuous reinforcing fibers arranged parallelly in one direction impregnated with the polyamide resin. Among heat welding, hot press is preferable. Hot pressing enables the metal plate and the prepreg to be firmly bonded.

Further, it is preferable that the method for producing the multilayer body of the first embodiment involves vibration welding, ultrasonically welding or laser welding the metal plate and the prepreg having the continuous reinforcing fibers arranged parallelly in one direction impregnated with the polyamide resin.

In the first embodiment, in the case where welding is carried out by laser welding, it is preferable that laser irradiation is carried out from the prepreg side, for example, from the arrow direction in Figure 1.

Then, when the metal plate and the prepreg are laminated, the metal plate may also be heated separately. The heating temperature at this time can be determined according to the thickness and the ply of the prepreg, and is, for example, preferably 50 to 200°C.

In the first embodiment, as described above, the metal plate 1 and the prepreg 2 are laminated, and further heated to weld the metal plate 1 and the prepreg 2. Here, the surface of the metal plate is allowed to have no irregularities, but usually has irregularities. Due to having irregularities, the contact area of the metal plate and the polyamide resin contained in the prepreg becomes large and the welding strength can be improved. Further, the melted polyamide resin solidifies in the form of entering recesses on the surface of the metal plate, whereby firmer bonding can be achieved.

In the first embodiment, the metal plate and the prepreg may be laminated in one sheet thereof each, but may be laminated in plural sheets thereof. In the case where a plurality of the prepregs are laminated, the lamination may be made so that the directions of the continuous reinforcing fibers of respective prepregs become the same direction, or may be made so as to become different directions. The lamination may be made, for example, so that the angle made by the fiber longitudinal direction of the continuous reinforcing fibers contained in a second-layer prepreg against the fiber longitudinal direction of the continuous reinforcing fibers contained in a first layer prepreg is 90°C, or 45°, 30° or the like.

A second embodiment is a method for producing a multilayer body.

The method for producing a multilayer body of the second embodiment is a method for producing a multilayer body which has a metal plate and a prepreg welded to the metal plate in the plane direction, wherein the prepreg has continuous reinforcing fibers arranged parallelly in one direction impregnated with a polyamide resin; the prepreg contains 5 to 300 parts by mass of the continuous reinforcing fibers with respect to 100 parts by mass of the polyamide resin; and the metal plate has a tensile strength as measured according to JIS Z2241 of 300 MPa or higher and 1,400 MPa or lower (preferably 1,200 MPa or lower), the method involving laminating the metal plate, a xylylenediamine-based polyamide resin film and the prepreg so as to be contacted in this order, and further heating the resultant to weld the metal plate, the xylylenediamine-based polyamide resin film and the prepreg, wherein the xylylenediamine-based polyamide resin film contains a polyamide resin containing a constitutional unit originated from diamines and a constitutional unit originated from dicarboxylic acids wherein 70% by mol or more of the constitutional unit originated from diamines is originated from xylylenediamines, and 70% by mol or more of the constitutional unit originated from dicarboxylic acids is originated from α,ω-straight-chain aliphatic dicarboxylic acids having 4 to 20 carbon atoms.

By realizing such a constitution, the metal plate and the prepreg can be firmly welded. In particular, even by using a welding method hardly attaining a high welding strength like laser welding, the metal plate and the prepreg can be welded suitably.

In particular, when the multilayer body as described above is produced, it is usual that the metal plate and the prepreg are welded. There are various methods of welding the metal plate and the prepreg, and for example, hot press or the like is known as a method of being capable of achieving relatively firm welding. However, as seen in the case where vehicular pillars are produced, there are cases where adoption of a relatively firm welding method such as hot press is difficult. By using the above-mentioned method for producing a multilayer body, even a welding method which hardly attain a high welding strength, such as laser welding, can suitably weld the metal plate and the prepreg.

In the second embodiment, for example, as shown in Figure 2, a metal plate 11, a xylylenediamine-based polyamide resin film 12 and a prepreg 13 are laminated so as to be contacted in this order. By thus welding the metal plate 11 and the prepreg 13 through the xylylenediamine-based polyamide resin film 12, even if a welding method which hardly attain a high welding strength is adopted, the metal plate 11 and the prepreg 13 can be welded firmly. This is based on that the xylylenediamine-based polyamide resin is a resin excellent in the adhesiveness with the metal plate 11, and a resin excellent in the adhesiveness with the prepreg containing the polyamide resin.

Then, in Figure 2, the ratios of thicknesses of each layer are not always reproduced. In the multilayer body obtained by the production method of the second embodiment, there may be cases where the xylylenediamine-based polyamide resin film and the prepreg melt and the boundary therebetween becomes vague.

The "welding of the metal plate and the prepreg" in the second embodiment has a meaning involving that the metal plate and the prepreg are welded through the xylylenediamine-based polyamide resin film, and usually, the metal plate and the prepreg are welded through the xylylenediamine-based polyamide resin film.

In the second embodiment, as described above, the metal plate 11, the xylylenediamine-based polyamide resin film 12 and the prepreg 13 are laminated so as to be contacted in this order, and further heated to weld the metal plate 11, the xylylenediamine-based polyamide resin film 12 and the prepreg 13. By the welding by heating, a part of or the whole of the xylylenediamine-based polyamide resin film and a part of or the whole of the polyamide resin contained in the prepreg are melted. Then, the melted xylylenediamine-based polyamide resin is welded to the metal plate and the prepreg. Here, the surface of the metal plate is allowed to have no irregularities, but usually has irregularities. Due to having irregularities, the contact area of the metal plate and the xylylenediamine-based polyamide resin becomes large and the welding strength can be improved. Further, the melted xylylenediamine-based polyamide resin solidifies in the form of entering recesses on the surface of the metal plate, whereby firmer welding can be attained.

In the second embodiment, the metal plate, the xylylenediamine-based polyamide resin film and the prepreg may be laminated in one sheet thereof each, but may be laminated in plural sheets thereof. In the case where a plurality of sheets of the prepregs are laminated, the lamination may be carried out so that the directions of the continuous reinforcing fibers of respective prepregs become the same direction, or may be made so as to become different directions. The lamination may be made, for example, so that the angle made by the fiber longitudinal direction of the continuous reinforcing fibers contained in a second-layer prepreg against the fiber longitudinal direction of the continuous reinforcing fibers contained in a first-layer prepreg is 90°C, or 45°, 30° or the like.

Welding means by heating may be any means, but examples thereof include vibrational welding, ultrasonic welding and lase welding, and laser welding is preferable. The present invention is highly valuable in that even in such welding means hardly enhancing the welding strength, a sufficient welding strength can be attained. As welding in the production method of the second embodiment, however, welding means of being capable of attaining an intrinsically high welding strength like hot press or the like can of course be adopted.

In the second embodiment, in the case where the welding is carried out by laser welding, it is preferable that irradiation with laser is carried out from the prepreg side, for example, from the arrow side in Figure 2. By adopting such a configuration, the irradiation to the prepreg alone, the irradiation to the metal plate alone, or the irradiation to both the prepreg and the metal plate can be controlled by the light source intensity, the light source position (distances to the prepreg and the metal plate) and the light source angle.

Further, it is preferable that the metal plate is also separately heated. The heating temperature at this time can be determined according to the thicknesses of the xylylenediamine-based polyamide resin film and the prepreg, and is, for example, preferably 50 to 200°C.

When the laser welding is carried out, it is preferable that the welding is carried out at a pressure by a pressure roller. At this time, the temperature of the roller can be determined according to the softening temperature and the melting point of the thermoplastic resin contained in the prepreg. The temperature can be set, for example, at a temperature of the melting point of the thermoplastic resin contained in the prepreg + 10 to 40°C. Then, the welding pressure of the heating roller can be set, for example, at 1 to 10 kgf.

Then, the metal plate in the second embodiment will be described.

The metal plate to be used in the second embodiment is the same as the metal plate described in the first embodiment, and the preferable range thereof is also the same.

Then, the prepreg in the second embodiment will be described.

The prepreg in the second embodiment is welded to the metal plate in the plane direction. By using the prepreg, while a high strength is attained, remarkable weight reduction in comparison with use of the metal plate alone becomes possible to be achieved.

In the second embodiment, the prepreg has the continuous reinforcing fibers arranged parallelly in one direction impregnated with the polyamide resin. By using the polyamide resin, the adhesiveness with the xylylenediamine-based polyamide resin film can be improved and the welding strength of the multilayer body can be enhanced. Further, by using the continuous reinforcing fibers arranged parallelly in one direction, the bending load in the fiber longitudinal direction can be raised. Hence, the multilayer body can be made into a material sufficiently meeting bending work and the like. In particular, although in ultrahigh tensile strength steels, though being high in elastic modulus, when their thickness becomes large, a high stress becomes necessary for bending work and the workability remarkably decreases, the multilayer body to be obtained by the production method of the second embodiment attains good bending workability and can simultaneously raise the strength.

The detail of the prepreg in the second embodiment is preferably the same as that of the prepreg described in the first embodiment.

The xylylenediamine-based polyamide resin film to be used in the second embodiment contains a polyamide resin containing a constitutional unit originated from diamines and a constitutional unit originated from dicarboxylic acids, wherein 70% by mol or more of the constitutional unit originated from diamines is originated from xylylenediamines, and 70% by mol or more of the constitutional unit originated from dicarboxylic acids is originated from α,ω-straight-chain aliphatic dicarboxylic acids having 4 to 20 carbon atoms. The xylylenediamine-based polyamide resin is a resin excellent in the weldability with metals, and can raise the welding strength of the prepreg and the metal plate.

The detail of the xylylenediamine-based polyamide resin is the same as that of the xylylenediamine-based polyamide resin described in the first embodiment, and the preferable range thereof is also the same.

The proportion of the xylylenediamine-based polyamide resin in the xylylenediamine-based polyamide resin film accounts for, in the whole film, preferably 90% by mass or higher, more preferably 95% by mass or higher and still more preferably 97% by mass or higher. The upper limit corresponds to that the total of the xylylenediamine-based polyamide resin becomes 100% by mass.

The xylylenediamine-based polyamide resin film may contain only one kind of the xylylenediamine-based polyamide resin, or may contain two or more kinds thereof. In the case of containing two or more kinds thereof, it is preferable that the total amount falls withing the above range.

The xylylenediamine-based polyamide resin film may contain polyamide resins other than the xylylenediamine-based polyamide resin, and additives.

The polyamide resin other than the xylylenediamine-based polyamide resin may be an aliphatic polyamide resin, may be a semi-aromatic polyamide resin or may be a mixture of the both.

As the semi-aromatic polyamide resin, polyamide 6T, polyamide 9T, polyamide 10T, polyamide 6I, polyamide 9I, polyamide 6T/6I, and polyamide 9T/9I are preferable.

Examples of the aliphatic polyamide resin include polyamide 6, polyamide 66, polyamide 666, polyamide 10, polyamide 610, polyamide 11 and polyamide 12; and polyamide 6, polyamide 66 and polyamide 666 are preferable, and polyamide 66 is more preferable,

Additives and the like can be added such as fillers, elastomers, antioxidants, stabilizers such as thermal stabilizers, hydrolysis resistance improvers, weathering stabilizers, delustering agents, ultraviolet absorbents, nucleating agents, plasticizers, dispersants, flame retardants, antistatic agents, coloring preventives, antigelling agents, colorants, release agents and lubricants. For details thereof, the description in paragraphs 0130 to 0155 of Japanese Patent No. 4894982 can be referred to, and the contents of which are hereby incorporated. The total amount of these components is preferably 10% by mass or lower of the xylylenediamine-based polyamide resin, more preferably 5% by mass or lower thereof and still more preferably 3% by mass or lower thereof, and may be 1% by mass or lower thereof.

The thickness of the xylylenediamine-based polyamide resin film is preferably 15 µm or larger, more preferably 17 µm or larger and still more preferably 19 µm or larger. Further, the thickness of the xylylenediamine-based polyamide resin film is preferably 50 µm or smaller, more preferably 40 µm or smaller, still more preferably 35 µm or smaller, further still more preferably 30 µm or smaller, and further still more preferably 25 µm or smaller. By making the thickness not smaller than the above upper limit value and not larger than the above lower limit value, the welding strength of the metal plate and the prepreg is likely to be improved more.

The multilayer body of the first embodiment and the multilayer body to be produced by the production method of the second embodiment are suitable for molded articles having hollows and bulges, molded articles having crooked portions, substrates to which hot press or the like is inapplicable, and molded articles having small sizes.

Specifically, the multilayer bodies can suitably be utilized for parts for automobiles, aircrafts, ships, electric and electronic devices such as personal computers, OA devices, audiovisual equipment and cell phones, optical devises, precision machines, toys, and household and business electric products.

In particular, it is preferable that the multilayer bodies are vehicular pillars or constituent parts thereof.

### [Examples]

Hereinafter, the present invention will be described more specifically by way of Examples. Materials, amounts used, proportions, treatment contents, treatment procedures and the like indicated in the following Examples may suitably be changed without departing the subject matter of the present invention. Accordingly, the scope of the present invention is not any more limited to specific examples shown in the below.

In the case where measurement devices used in Examples are difficult in availability due to the abolition or the like thereof, the measurements can be made by using other devices having the same capabilities.

### 1. Raw materials

MXD6: a polyamide resin synthesized from meta-xylylenediamine and adipic acid, manufactured by Mitsubishi Gas Chemical Co. Ltd., item number: #6000
PA66: a polyamide 66, manufactured by Toray Industries, Inc., item number: CM3001-N
MP10: a polyamide resin synthesized from xylylenediamine and sebacic acid by the following Synthesis Example.

### <Synthesis Example of MP10>

After sebacic acid was thermally dissolved in a reaction vessel in a nitrogen atmosphere, while under stirring of the content, a mixed diamine in a molar ratio of 3 : 7 of para-xylylenediamine (manufactured by Mitsubishi Gas Chemical Co. Ltd.) and meta-xylylenediamine (manufactured by Mitsubishi Gas Chemical Co. Ltd.) were slowly dropwise charged at a pressure (0.35 MPa) so that the molar ratio of the diamine and the sebacid acid became about 1 : 1, the temperature was raised up to 235°C. After the finish of the dropwise charging, the reaction was continued for 60 min to regulate the amount of components of 1,000 or lower in molecular weight. After the finish of the reaction, the content was taken out in a strand form, and pelletized by a pelletizer to thereby obtain the polyamide resin (MP10, M/P = 7 : 3)
PA6: a polyamide 6, manufactured by UBE Industries, Ltd., item number: 1022B

Carbon fiber: manufactured by Toray Industries, Inc., a carbon fiber roving surface-treated with an epoxy-based resin Talc: MS Talc, manufactured by Nippon Talc Co. Ltd.
StCa: calcium stearate, manufactured by Nittoh Chemical Co. Ltd. High tensile strength steels (metal plates): those having a tensile strength and a thickness described in Tables 1 to 3, the tensile strengths were values measured according to JIS Z2241.

### <Production Example 1: Production of a prepreg (MXD6-CF)>

90 parts by mass of MXD6, 9 parts by mass of PA66, 0.9 parts by mass of the talc and 0.1 parts by mass of StCa were weighed, dry blended, fed to a twin-screw extruder (trade name: TEM26SS, manufactured by Shibaura Machine Co. Ltd.) from a top feed port, and melt kneaded at a cylinder temperature of 280°C at a screw rotating speed of 200 pm to thereby obtain an MXD6 composition.

10 rolls of carbon fibers in a roving form were arranged at equal intervals, and passed through a spreader to be extended to about 100 mm wide. When the extended carbon fibers are put in between upper and lower two impregnation rolls, the MXD6 composition melted was fed to impregnate the carbon fibers with the MXD6 composition melted, in the impregnation rolls. Thereafter, the resultant was taken up while being cooled by cooling rolls, and wound up on a cylindrical core material to thereby fabricate a tape.

The proportion of the volume of the carbon fibers in the prepreg was 38% by volume (92 parts by mass with respect to 100 parts by mass of the polyamide resin).

### <Production Example 2: Production of a prepreg (MP10-CF)>

A prepreg composed of MP10-CF was produced by the same method as in Production Example 1, except for altering the resins (PAMXD6 and PA66) of Production Example 1 to MP10 in the same amount.

The proportion of the volume of the carbon fibers in the prepreg was 40% by volume (116 parts by mass with respect to 100 parts by mass of the polyamide resin).

### <Production Example 3: Production of a prepreg (PA6-CF)>

A prepreg composed of PA6-CF was produced by the same method as in Production Example 1, except for altering the resins (MXD6 and PA66) of Production Example 1 to PA6 in the same amount.

The proportion of the volume of the carbon fibers in the prepreg was 44% by volume (125 parts by mass with respect to 100 parts by mass of the polyamide resin).

<Production Example 4: Production of a xylylenediamine-based polyamide resin film (MXD6)>

The polyamide resin MXD6 was fed to a single-screw extruder equipped with a 30 mmφ screw and a T die, extruded at an extrusion temperature of 260°C at 50 rpm and cooled by cooling rolls at 80°C to thereby obtain a cast film of 20 µm in thickness.

### 2. Examples 1-1 to 1-8

### <Production of multilayer bodies>

In each Example, the surface of a high tensile strength steel (metal plate) was subjected to sand blast treatment using Alumina #180 (manufactured by MonotaRO Co. Ltd.).

Prepregs (in the number of plies of the prepreg indicated in Table 1 to 3) were laminated on the treated surface of the high tensile strength steel sand blast-treated.

Thereafter, the resultant was hot pressed at 280°C at a pressure of 2.0 MPa for 15 min to thereby obtain a multilayer body.

### <Maximum bending load>

By using a universal testing machine (manufactured by Instron Corp., "CAEAST 9350 type"), a bending test was carried out according to ISO178 at a span of 32 mm, at a testing speed of 1.7 mm/min under environments of 23°C and 80°C, to measure the maximum bending load. The unit of the maximum bending load is indicated in N.

Then, in the bending test under the environment of 80°C, peeling of a welded surface between a metal and a prepreg was observed; and the displacement (mm) from the bending test initiation is indicated in Tables 1 to 3. It can be said that the larger the displacement value, the more hardly the metal plate and the prepreg were separated in working and the better the workability is.

### Comparative Examples 1-1 to 1-3, and 1-5

For a metal plate having a predetermined thickness and a tensile strength indicated in Tables 1 to 3, the weight of a test piece and the maximum bending load were measured.

### Comparative Example 1-4

### <Production of a random sheet>

A prepreg composed of PA6-CF was produced by the same method as in Production Example 1, except for altering the resins (PAMXD& and PA66) of Production Example 1 to PA6 in the same amount. The proportion of the volume of carbon fibers in the prepreg was 44% by volume (125 parts by mass with respect to 100 parts by mass of the polyamide resin).

The obtained prepreg was cut into 12.5 cm wide and 25 cm long; and the cut prepregs were randomly spread over a 200 mm square so that the thickness after hot press became 1.0 mm, and hot pressed at 250°C at a pressure of 2.0 MPa for 15 min to thereby produce a random sheet.

In Example 1-4, one sheet of the random sheet obtained in the above was laminated in place of a prepreg, and other procedures were carried out similarly to thereby obtain a multilayer body. For the obtained multilayer body, the weight of the test piece and the maximum bending load were measured.

**[Table 1]**

| | Example 1-1 | Example 1-2 | Example 1-3 | Comparative Example 1-1 | Comparative Example 1-2 |
|---|---|---|---|---|---|
| Base resin | MXD6 | MXD6 | MXD6 | - | - |
| Number of ply of prepreg | 1ply | 3ply | 5ply | - | - |
| Tensile strength of metal plate (MPa) | 1180MPa | 1180MPa | 1180MPa | 1180MPa | 1180MPa |
| Thickness of metal plate (mm) | 1.0 | 1.0 | 1.0 | 1.0 | 1.4 |
| Thickness of multilayer body (mm) | 1.1 | 1.4 | 1.8 | 1.0 | 1.4 |
| Mass of multilayer body (g) | 11.6 | 12.4 | 13.5 | 11.2 | 13.0 |
| Maximum bending strength (23°C) (N) | 834 | 1,419 | 2,148 | 712 | 1,379 |
| Maximum bending strength (80°C) (N) | 809 | 1,096 | 1,433 | 682 | 1,374 |
| Amount of displacement when in a bending test, peeling was observed at a welded surface between a metal and a prepreg (80°C) (mm) | 2.2 | 2.2 | 2.2 | - | - |

**[Table 2]**

| | Example 1-4 | Example 1-5 | Example 1-6 | Example 1-7 | Comparative Example 1-3 | Comparative Example 1-4 |
|---|---|---|---|---|---|---|
| Base resin | MXD6 | MXD6 | MP10 | PA6 | - | PA6 |
| Number of ply of prepreg | 3ply | 5ply | 5ply | 5ply | - | random sheet |
| Tensile strength of metal plate (MPa) | 590MPa | 590MPa | 590MPa | 590MPa | 590MPa | 590MPa |
| Thickness of metal plate (mm) | 1.0 | 1.0 | 1.0 | 1.0 | 1.0 | 1.0 |
| Thickness of multilayer body (mm) | 1.5 | 1.7 | 1.8 | 1.8 | 1.0 | 1.8 |
| Mass of multilayer body (g) | 12.7 | 13.1 | 13.4 | 13.4 | 11.1 | 13.4 |
| Maximum bending strength (23°C) (N) | 1,000 | 1,186 | 1,309 | 1,105 | 366 | 599 |
| Maximum bending strength (80°C) (N) | 591 | 918 | 768 | 462 | 351 | 453 |
| Amount of displacement when in a bending test, peeling was observed at a welded surface between a metal and a prepreg (80°C) (mm) | 1.7 | 2.1 | 1.4 | 0.5 | - | 1.0 |

**[Table 3]**

| | Example 1-8 | Comparative Example 1-5 |
|---|---|---|
| Base resin | MXD6 | - |
| Number of ply of prepreg | 5ply | - |
| Tensile strength of metal plate (MPa) | 340MPa | 340PMa |
| Thickness of metal plate (mm) | 1.0 | 1.0 |
| Thickness of multilayer body (mm) | 1.7 | 1.0 |
| Mass of multilayer body (g) | 13.0 | 11.0 |
| Maximum bending strength (23°C) (N) | 840 | 207 |
| Maximum bending strength (80°C) (N) | 747 | 201 |
| Amount of displacement when in a bending test, peeling was observed at a welded surface between a metal and a prepreg (80°C) (mm) | 2.4 | 4.8 |

As is clear from the results of the above Tables 1 to 3, the multilayer body of the present invention, as compared with the cases of a metal plate alone, while being light in weight, attained a maximum bending load matching that of the metal plate. On the other hand, a metal plate was inferior in workability, but the multilayer body of the present invention was excellent in heat workability at 80°C. Further, the multilayer body of the present invention could attain a remarkably higher maximum bending load than that of the fiber-reinforced resin in which fibers are dispersed in random directions, by using a prepreg having continuous reinforcing fibers arranged parallelly in one direction.

### 3. Examples 2-1 and 2-2

In each Example, the surface of a high tensile strength steel (metal plate, tensile strength: 1,180 MPa, thickness: 1.0 mm, the tensile strength was a value measured according to JIS Z2241) was subjected to sand blast treatment using Alumina #180 (manufactured by MonotaRO Co. Ltd.).

On the treated surface of the above sand blast-treated high tensile strength steel, a polyamide resin film (one sheet) of the kind indicated in Table 4 and a prepreg (one ply) were laminated in this order.

Thereafter, laser welding was carried out from the prepreg side under the following condition to thereby obtain a multilayer body.
<Laser welding condition>
Laser welding apparatus: AFP apparatus HUMM3
Transfer speed: 24 mm/sec
Temperature around pressure rollers: 260°C
Roller pressure: 4 kgf
Temperature of the high tensile strength steel: a temperature indicated in Table 4

For the obtained multilayer body, as described below, the shearing strength was measured. Further, it is also indicated whether the peeling mode was base material fracturing or interfacial peeling. It can be said that the base material fracture implied firmer welding.

### <Measurement of the shearing strength>

Both ends in the longitudinal directions of a metal plate and a resin composition part unified by welding were held with clamps by using a jig for tension according to ISO19095, and by using a tensile testing machine (manufactured by Instron Corp., "5544 type"), the resultant under the condition of an interchuck distance of 80 mm was pulled at a tensile speed of 5 mm/min to measure the bonding strength (N).

**[Table 4]**

| | | Example 2-1 | Example 2-2 |
|---|---|---|---|
| Prepreg | kind | MXD6-CF | PA6-CF |
| PA film | kind | MXD6 | MXD6 |
| Temperature of a high tensile strength steel | °C | 120 | 120 |
| Shearing strength | kN | 11.7 | 11.2 |
| Peeling mode | | base material fracture | base material fracture |

As is clear from the above results, in the production method of a multilayer body of the present invention, the metal plate (high tensile strength steel) and the prepreg were fully welded (Examples 2-1 and 2-2).

### [Reference Signs List]

- 1: METAL PLATE

- 2: PREPREG
- 11: METAL PLATE
- 12: XYLYLENEDIAMINE-BASED POLYAMIDE RESIN FILM
- 13: PREPREG

## Claims

1. A multilayer body, comprising: a metal plate; and a prepreg adhered directly or indirectly to the metal plate in the plane direction,
wherein the prepreg has continuous reinforcing fibers arranged parallelly in one direction impregnated with a polyamide resin, and contains 5 to 300 parts by mass of the continuous reinforcing fibers with respect to 100 parts by mass of the polyamide resin; and the metal plate has a tensile strength as measured according to JIS Z2241 of 300 MPa or higher and 1,400 MPa or lower.

2. The multilayer body according to claim 1, wherein the metal plate has the tensile strength as measured according to JIS Z2241 of 1,200 MPa or lower.

3. The multilayer body according to claim 1 or 2, wherein the continuous reinforcing fibers comprise at least one selected from the group consisting of carbon fibers and glass fibers.

4. The multilayer body according to claim 1 or 2, wherein the metal plate has a thickness of 2.0 mm or smaller.

5. The multilayer body according to claim 1 or 2, wherein the prepreg has a content of the continuous reinforcing fibers of 30 to 70% by volume.

6. The multilayer body according to claim 1 or 2, wherein the polyamide resin comprises a polyamide resin containing a constitutional unit originated from diamines and a constitutional unit originated from dicarboxylic acids, wherein 70% by mol or more of the constitutional unit originated from diamines is originated from xylylenediamines, and 70% by mol or more of the constitutional unit originated from dicarboxylic acids is originated from α,ω-straight-chain aliphatic dicarboxylic acids having 4 to 20 carbon atoms.

7. The multilayer body according to claim 1,
wherein the continuous reinforcing fibers comprise at least one selected from the group consisting of carbon fibers and glass fibers;
the metal plate has a thickness of 2.0 mm or smaller;
the prepreg has a content of the continuous reinforcing fibers of 30 to 70% by volume; and
the polyamide resin comprises a polyamide resin containing a constitutional unit originated from diamines and a constitutional unit originated from dicarboxylic acids, wherein 70% by mol or more of the constitutional unit originated from diamines is originated from xylylenediamines, and 70% by mol or more of the constitutional unit originated from dicarboxylic acids is originated from α,ω-straight-chain aliphatic dicarboxylic acids having 4 to 20 carbon atoms.

8. A method for producing a multilayer body according to any one of claims 1, 2 and 7, the method comprising heat welding the metal plate and the prepreg having continuous reinforcing fibers arranged parallelly in one direction impregnated with a polyamide resin.

9. A method for producing a multilayer body according to any one of claims 1, 2 and 7, the method comprising vibration welding, ultrasonic welding or laser welding the metal plate and the prepreg having continuous reinforcing fibers arranged parallelly in one direction impregnated with a polyamide resin.

10. A method for producing a multilayer body comprising a metal plate and a prepreg welded to the metal plate in the plane direction,
wherein the prepreg has continuous reinforcing fibers arranged parallelly in one direction impregnated with a polyamide resin;
the prepreg contains 5 to 300 parts by mass of the continuous reinforcing fibers with respect to 100 parts by mass of the polyamide resin; and
the metal plate has a tensile strength as measured according to JIS Z2241 of 300 MPa or higher and 1,400 MPa or lower,
the method comprising laminating the metal plate, a xylylenediamine-based polyamide resin film and the prepreg so as to be contacted in this order, and further heating the resultant to weld the metal plate, the xylylenediamine-based polyamide resin film and the prepreg,
wherein the xylylenediamine-based polyamide resin film comprises a polyamide resin containing a constitutional unit originated from diamines and a constitutional unit originated from dicarboxylic acids, wherein 70% by mol or more of the constitutional unit originated from diamines is originated from xylylenediamines, and 70% by mol or more of the constitutional unit originated from dicarboxylic acids is originated from α,ω-straight-chain aliphatic dicarboxylic acids having 4 to 20 carbon atoms.

11. The method for producing a multilayer body according to claim 10, wherein the xylylenediamine-based polyamide resin film has a thickness of 15 to 50 µm.

12. The method for producing a multilayer body according to claim 10 or 11, wherein the prepreg comprises a polyamide resin containing a constitutional unit originated from diamines and a constitutional unit originated from dicarboxylic acids, wherein 70% by mol or more of the constitutional unit originated from diamines is originated from xylylenediamines, and 70% by mol or more of the constitutional unit originated from dicarboxylic acids is originated from α,ω-straight-chain aliphatic dicarboxylic acids having 4 to 20 carbon atoms.

13. The method for producing a multilayer body according to claim 10 or 11, wherein the welding is carried out by laser welding wherein laser irradiation is carried out from the prepreg side.

14. The method for producing a multilayer body according to claim 10 or 11, wherein the continuous reinforcing fibers comprise at least one selected from the group consisting of carbon fibers and glass fibers.

15. The method for producing a multilayer body according to claim 10 or 11, wherein the metal plate has a thickness of 2.0 mm or smaller.

16. The method for producing a multilayer body according to claim 10 or 11, wherein the prepreg has a content of the continuous reinforcing fibers of 30 to 70% by volume.

17. The method for producing a multilayer body according to claim 10 or 11, wherein the multilayer body is a vehicular pillar or a constituent part thereof.

18. The method for producing a multilayer body according to claim 10,
wherein the xylylenediamine-based polyamide resin film has a thickness of 15 to 50 µm;
the prepreg comprises a polyamide resin containing a constitutional unit originated from diamines and a constitutional unit originated from dicarboxylic acids, wherein 70% by mol or more of the constitutional unit originated from diamines is originated from xylylenediamines, and 70% by mol or more of the constitutional unit originated from dicarboxylic acids is originated from α,ω-straight-chain aliphatic dicarboxylic acids having 4 to 20 carbon atoms;
the welding is carried out by laser welding wherein laser irradiation is carried out from the prepreg side;
the continuous reinforcing fibers comprise at least one selected from the group consisting of carbon fibers and glass fibers;
the metal plate has a thickness of 2.0 mm or smaller;
the prepreg has a content of the continuous reinforcing fibers of 30 to 70% by volume; and
the multilayer body is a vehicular pillar or a constituent part thereof.

19. The method for producing a multilayer body according to any one of claims 10, 11 and 18, wherein the metal plate has a tensile strength as measured according to JIS Z2241 of 300 MPa or higher and 1,200 MPa or lower.

20. A multilayer body,
wherein a metal plate, a xylylenediamine-based polyamide resin film and a prepreg having continuous reinforcing fibers arranged parallelly in one direction impregnated with a polyamide resin are laminated so as to be contacted in this order;
the metal plate has a tensile strength as measured according to JIS Z2241 of 300 MPa or higher and 1,400 MPa or lower; and
the xylylenediamine-based polyamide resin film comprises a polyamide resin containing a constitutional unit originated from diamines and a constitutional unit originated from dicarboxylic acids, wherein 70% by mol or more of the constitutional unit originated from diamines is originated from xylylenediamines, and 70% by mol or more of the constitutional unit originated from dicarboxylic acids is originated from α,ω-straight-chain aliphatic dicarboxylic acids having 4 to 20 carbon atoms.
